# EUROPÄISCHE PATENTSCHRIFT

(11) **EP 3 455 595 B1**
(45) Veröffentlichungstag und Bekanntmachung des Hinweises auf die Patenterteilung: **07.07.2021**
(21) Anmeldenummer: 17719614.4
(22) Anmeldetag: 27.04.2017
(51) Int. Cl.: G01F 1/692, G01F 1/696

(54) **THERMISCHER DURCHFLUSSSENSOR**
THERMAL FLOW SENSOR
CAPTEUR DE DÉBIT THERMIQUE

(30) Priorität: 10.05.2016 DE 102016108625
(43) Veröffentlichungstag der Anmeldung: 20.03.2019
(73) Patentinhaber: Innovative Sensor Technology IST AG, 9642 Ebnat-Kappel (CH)
(72) Erfinder: HOLOUBEK, Jiri, 756 61 Roznow pod Radhostem (CZ)
(74) Vertreter: Andres, Angelika Maria
(86) Internationale Anmeldenummer: PCT/EP2017/060074
(87) Internationale Veröffentlichungsnummer: WO 2017/194319

(56) Entgegenhaltungen:
- EP-A1- 0 809 090
- EP-A1- 1 418 408
- EP-A1- 2 477 008
- WO-A1-2016/027568
- WO-A1-2016/044407
- JP-A- H0 611 374
- US-A1- 2012 085 163
- US-A1- 2012 247 202

## Beschreibung

Die Erfindung betrifft einen thermischen Durchflusssensor.

Zur Bestimmung von Strömungseigenschaften, insbesondere des Durchflusses, eines Mediums (beispielsweise eines Fluides oder Gases) sind thermische Durchflusssensoren bekannt, die ausnutzen, dass ein strömendes bzw. fließendes Medium Wärme transportiert. Derartige Durflusssensoren weisen zumindest ein Heizelement und zumindest einen Temperatursensor auf, um den Durchfluss des Mediums zu bestimmen.

Bekannt sind aus dem Stand der Technik so genannte Anemometer, bei denen die Heizleistung derartig geregelt wird, dass sich eine vorbestimmte Temperatur an dem mindestens einen Temperatursensor aufgrund des Wärmetransports des Mediums einstellt. Anhand der zugeführten Heizleistung lässt sich der Durchfluss des Mediums bestimmen.

Ferner sind aus dem Stand der Technik so genannte kalorimetrische Durchflusssensoren bekannt, die mittels mindestens zweier in der Regel in Durchflussrichtung versetzt angeordneten Temperatursensoren den Durchfluss des Mediums ermitteln. Hierbei wird das Medium an einem zwischen den beiden Temperatursensoren liegenden Heizelement erwärmt bzw. erhitzt. Die Temperaturdifferenz zwischen den beiden Temperatursensoren wird bestimmt, um so den Durchfluss des Mediums zu erhalten. Bei dieser Methode wird die durch das Heizelement aufgebrachte und an das Medium übertragene Heizleistung nicht geregelt.

Die vorliegende Erfindung bezieht sich auf kalorimetrische Durchflusssensoren mit widerstandsbasierten Temperatursensoren.

Als widerstandsbasierte Temperatursensoren werden dabei häufig kaltleitende Materialen verwendet (auch PCT genannt), für die mit steigender Temperatur der Widerstand in erster Ordnung linear zunimmt. Unter den Kaltleitern ist wiederum Platin ein bevorzugtes Material, da Platin eine insgesamt höchstens quadratische Abhängigkeit des Widerstands von der Temperatur aufweist.

Fließt in einem Messbetrieb Strom durch die Widerstände, erwärmen sich diese. Steht einer der Widerstände in Kontakt mit dem Medium, wird damit auch eine Wärmemenge Q in das Medium eingebracht, welche durch den Durchfluss abtransportiert wird. Da bei kalorimetrischen Durchflusssensoren die eingebrachte Wärmemenge nicht auf einen bestimmten Wert geregelt wird, muss die mit der Heizleistung verbundene Wärmemenge weder konstant noch bekannt sein. Daher sind derartige temperaturabhängige Widerstände zur Eigenheizung geeignet, so dass im Prinzip kein separates Heizelement nötig ist. Das Maß für den Durchfluss ist in diesem Fall eine durch den Durchfluss verursachte Asymmetrie, beispielsweise eine Verschiebung der durch die Eigenheizung erzeugten Wärmeverteilung bzw. Verformung der durch die Eigenheizung verursachten sogenannten thermischen Blase.

Es ist wünschenswert, mit einer derartigen Vorrichtung eine möglichst genaue Durchflussmessung zu ermöglichen. Eine wichtige Störgröße stellt hierbei die Temperatur selbst dar. Das Messsignal für den Durchfluss sollte möglichst nicht von der Umgebungstemperatur, der Temperatur des Mediums, aber auch einer Differenz zwischen Umgebungs- und Medientemperatur oder Änderungen von Umgebungs- und Medientemperatur abhängen.

Die JP 06011374 A offenbart einen thermischen Durchflusssensor zur Bestimmung des Durchflusses eines in eine Durchflussrichtung strömenden Mediums, wobei vier elektrische Widerstände mit einen temperaturabhängigen elektrischen Widerstand aus einem kaltleitenden Material und eine Regel-/Auswerteeinheit vorgesehen sind, wobei die vier Widerstände in einer Wheatstone'schen Brücke miteinander verschaltet sind, wobei die Wheatstone'sche Brücke als mehrere Dünnschichtsensorelemente ausgestaltet ist und das Dünnschichtsensorelement eine auf einem elektrisch isolierenden Substrat angeordnete Widerstandsstruktur mit einer Schichtdicke von 0.1 Mikrometer ausgestaltet ist, wobei die vier Widerstände im Messbetrieb im thermischen Kontakt mit dem Medium stehen wobei die Regel-/Auswerteeinheit dazu ausgestaltet ist, im Messbetrieb die Wheatstone'schen Brücke über zwei erste nicht benachbarte Leiterknoten der Wheatstone'schen Brücke mit einem elektrischen Strom zu speisen, und wobei die Regel-/Auswerteeinheit dazu ausgestaltet ist, die im Messbetrieb vorliegende Spannung an zwei zweiten nicht benachbarten Leiterknoten der Wheatstone'schen Brücke zu messen und daraus den Durchfluss zu bestimmen, wobei eine auf dem Substrat angeordnete nicht-wärmeleitende erste Membran vorgesehen ist,
wobei in einem vorgegebenen Bereich des Substrats die Widerstände der Widerstandsstruktur auf der ersten Membran angeordnet sind,
wobei die erste Membran in dem vorgegebenen Bereich frei tragend ist,
wobei die erste Membran die Widerstände von dem Substrat im vorgegebenen Bereich in der zu der Oberfläche des Substrats senkrechten Richtung thermisch isoliert,
wobei die erste Membran zumindest eine gemeinsame Symmetrieachse mit dem Substrat aufweist, wobei die gemeinsame Symmetrieachse im Wesentlichen parallel zur Oberfläche des Substrats ist. Dokument US 2012/247202 offenbart auch eine ähnliche Vorrichtung.

Der Erfindung liegt die Aufgabe zugrunde, einen derartigen, thermischen Durchflusssensor, anzugeben, bei dem temperaturbedingte Einflüsse möglichst gering sind und der robust gegenüber Herstellungseinflüssen ist.

Die Aufgabe wird gelöst durch einen thermischer Durchflusssensor gemäß Anspruch 1. Die Erfindung umfasst einen thermischer Durchflusssensor zur Bestimmung des Durchflusses eines in eine Durchflussrichtung strömenden Mediums, wobei vier elektrische Widerstände mit einen temperaturabhängigen elektrischen Widerstand aus einem kaltleitenden Material und einer Regel-/Auswerteeinheit vorgesehen sind, wobei die vier Widerstände in einer Wheatstone'schen Brücke miteinander verschaltet sind, wobei die vier Widerstände im Messbetrieb im thermischen Kontakt mit dem Medium stehen und in Durchflussrichtung hintereinander versetzt angeordnet sind, wobei die Regel-/Auswerteeinheit dazu ausgestaltet ist, im Messbetrieb die Wheatstone'schen Brücke über zwei erste nicht benachbarte Leiterknoten der Wheatstone'schen Brücke mit einem elektrischen Strom zu speisen, wobei der gespeiste Strom auf einen konstanten vorgegebenen Wert geregelt ist, und wobei die Regel-/Auswerteeinheit dazu ausgestaltet ist, die im Messbetrieb vorliegende Spannung an zwei zweiten nicht benachbarten Leiterknoten der Wheatstone'schen Brücke zu messen und daraus den Durchfluss zu bestimmen.

Im Rahmen der Erfindung sind die Widerstände und/oder die Wheatstone'sche Brücke als ein oder mehrere Dünnschichtsensorelemente ausgestaltet, wobei das Dünnschichtsensorelement eine auf einem elektrisch isolierendem Substrat angeordnete Widerstandsstruktur mit einer Schichtdicke von 0.1-10 Mikrometer aufweist.

Aufgrund ihrer Miniaturisierbarkeit und der schnellen Ansprechzeit sind jedoch Durchflusssensoren vorteilhaft, welche die auf Dünnschichtsensorelementen basierende Temperatursensoren einsetzen. Dünnschichtsensorelemente bestehen dabei aus einer dünnen Widerstandsstruktur mit einer Dicke von einigen Mikrometern, welche auf einem elektrisch isolierenden Substrat (beispielsweise einer Keramik) angeordnet ist. Üblicherweise ist die Widerstandsstruktur durch eine Abdeckungsschicht (beispielsweise aus Glas) isoliert und geschützt. Der Widerstand wird im Wesentlichen über die Länge der Widerstandsstruktur eingestellt. Dazu weist die Widerstandsstruktur auf dem Substrat in der Regel einen mäanderförmigen Verlauf auf, um so die benötigte Länge für den messbaren Widerstandswert zu erreichen.

Im Rahmen der Erfindung ist eine auf dem Substrat angeordnete nicht-wärmeleitende erste Membran vorgesehen, wobei in einem vorgegebenen Bereich des Substrats die Widerstände der Widerstandsstruktur auf der ersten Membran angeordnet sind, und wobei das Substrat in dem vorgegeben Bereich in einer zu der Oberfläche des Substrats senkrechten Richtung um einen vorgegebenen Versatz abgesenkt ist, so dass die erste Membran in dem vorgegebenen Bereich frei tragend ist, und dass die erste Membran die Widerstände von dem Substrat im vorgegebenen Bereich in der zu der Oberfläche des Substrats senkrechten Richtung thermisch isoliert.

Es ist der thermische Durchflusssensor als ein einziges Dünnschichtsensorelement ausgestaltet. Dies wird beispielsweise so hergestellt, dass die erste Membran zunächst auf die gesamte Oberfläche des ursprünglich ebenen Substrats aufgebracht. In einem nachträglichen Arbeitsschritt wird das Material des Substrats in dem vorgegebenen Bereich selektiv weggeätzt. Dadurch wird ein Spalt zwischen der ersten Membran und Substrat in dem vorgegebenen Bereich erzeugt. Damit ist das Substrat ist in der senkrechten Richtung um einen vorgegebenen Versatz abgesenkt. Auf diese Art ist die erste Membran in dem vorgegeben Bereich, in dem die Widerstände bzw. die Widerstandsstruktur angeordnet sind, frei tragend. Dadurch werden die Widerstände bzw. die Widerstandsstruktur von dem Substrat thermisch isoliert. Auch dies ist hilfreich, um die temperaturbedingten Einflüsse zu minimieren.

Im Rahmen der Erfindung weist die erste Membran zumindest eine gemeinsame Symmetrieachse mit dem Substrat auf, wobei die gemeinsame Symmetrieachse im Wesentlichen parallel zur Oberfläche des Substrats ist.

Im Rahmen der Erfindung bewirkt eine durch Schwankungen in der Fertigung bedingte Verschiebung der Widerstände in Bezug auf die Symmetrieachse von unter 10%
- eine erste Längenänderung des auf der ersten Membran angeordneten Abschnitts der Widerstandsstruktur im ersten Strompfad der Wheatstone'schen Brücke und
- eine zweite Längenänderung des auf der ersten Membran angeordneten Abschnitts der Widerstandsstruktur im zweiten Strompfad der Wheatstone'schen Brücke,
wobei die erste und die zweite Längenänderung im Wesentlichen gleich groß sind.
Auf diese Weise ist die Längenänderung der auf der Membran angeordneten Widerstandsstruktur für die beiden parallelen Strompfade der Wheatstone'schen Brücke im Wesentlichen gleich. Diese Ausgestaltung eignet sich insbesondere in Kombination mit der ersten Ausgestaltung der Erfindung, das heißt der symmetrischen Wheatstone'schen Brücke.

Die Erfindung beinhaltet, eine auf einen konstanten Strom geregelte Wheatstone'sche Brücke mit vier Widerständen zu verwenden, wobei alle Widerstände der Wheatstone'sche Brücke im thermischen Kontakt mit dem Medium stehen und in Durchflussrichtung versetzt angeordnet sind.

Die Wheatstone'sche Brücke wird durch eine geschlossene Leitermasche gebildet, in der vier Widerstände und vier zwischen den Widerständen angeordnete Leiterknoten vorliegen. Ein Leiterknoten ist ein Punkt, in dem drei Leiter zusammenführen. Jeder der Leiterknoten hat zwei benachbarte Leiterknoten, sowie einen nicht benachbarten Leiterknoten. Der nicht benachbarte Leiterknoten wird im Stand der Technik auch als diagonaler Leiterknoten bezeichnet. In der Wheatstone'schen Brückenschaltung sind die Widerstände damit paarweise parallel und in Reihe geschaltet sind. Die Wheatstone'sche Brücke wird über zwei nicht benachbarte Leiterknoten mit einem konstant geregelten Strom gespeist. Der Strom teilt sich in zwei Strompfade auf. Das Messsignal ist die an den zwei weiteren, nicht benachbarten Leiterknoten der Wheatstone'schen Brücke vorliegende Spannung. Diese sogenannte Brückenspannung ist ein Maß für die durch den Durchfluss eingeführte Asymmetrie. Da alle Widerstände im thermischen Kontakt mit dem Medium stehen, wird zunächst (d.h. außerhalb des Messbetriebs) ein isothermischer Zustand der Widerstände erreicht. Dies ist hilfreich zur Eliminierung von Temperatureffekten.

Im Messbetrieb ist die Heizleistung dann im Wesentlichen P=UI, wobei U die an der Wheatstone'schen Brücke abfallenden Spannung und I der Strom ist. Bei konstanter Stromspeisung der Wheatstone'schen Brücke berechnet sich die Heizleistung zu P= R*I², wobei I der vorgegebene Wert des konstant geregelten Stromes ist. Damit ist auch der Quotient aus Heizleistung und Gesamtwiderstand zwangsläufig konstant: P/R=const. Dies bewirkt, dass eine rein temperaturbedingte Änderung des Gesamtwiderstandes der Wheatstone'schen bei der Regelung auf den konstanten Strom gleichermaßen eine Änderung der Heizleistung nach sich zieht. Die Widerstände sind dabei aus einem kaltleitenden Material. Damit wird eine steigende Temperatur auch zu einem linear steigenden Widerstand und damit einer linear steigenden Heizleistung führen. Auf diese Weise passt sich durch die Regelung auf den konstanten Strom die Heizleistung automatisch an die Temperatur an. Durch diese Regelung werden damit Temperatureffekte automatisch kompensiert, da aufgrund der Regelung die Heizleistung automatisch mit steigender Temperatur steigt.

Würde die Wheatstone'schen Brücke statt dessen mit konstanter Spannung gespeist, so würde gelten P=U²/R bzw. P*R=const. In diesem Fall würde eine Erhöhung des Widerstands zu einer Erniedrigung der Heizleistung führen, so dass für die Widerstände aus dem kaltleitenden Material keine Kompensation stattfindet. Würde in diesem Fall statt des kaltleitenden Material ein warmleitendes Material verwendet werden (also ein NTC Material bzw. eine Material dessen Widerstand mit steigender Temperatur sinkt), würde bei steigender Temperatur der Widerstand sinken. Da die Heizleistung aufgrund von P*R=const. steigt, passt sich auch in diesem Fall die Heizleistung automatisch an die Temperatur an. Da NTC Materialien in der Regel stark nicht-linear sind, gestaltetet sich die Kompensation von Temperatureffekten in diesem Fall komplizierter, so dass diese technische Alternative nicht Teil der vorliegenden Anmeldung ist.

In einer bevorzugten Ausgestaltung der Erfindung sind jeweils zwei der vier Widerstände im Wesentlichen identisch ausgestaltet, wobei die im Wesentlichen identisch ausgestalteten Widerstände jeweils durch einen Leiterknoten der Wheatstone'schen Brücke benachbart sind, und wobei die jeweils im Wesentlichen identisch ausgestalteten Widerstände im Wesentlichen spiegelsymmetrisch in Bezug auf eine gemeinsame Spiegelachse angeordnet sind, wobei die Spiegelachse im Wesentlichen senkrecht zur Durchflussrichtung ist.

Die vier Widerstände sind also zwei Paare von im Wesentlichen identisch ausgestalteten Widerstände: die ersten beiden Widerstände sind im Wesentlichen identisch ausgestaltetet, und die zweiten beiden Widerstände sind im Wesentlichen identisch ausgestaltetet. Identisch ausgestaltet heißt im Rahmen dieser Anmeldung, dass die Widerstände denselben nominellen Widerstandswert und dieselbe Kennlinie aufweisen, dass es sich also beispielsweise um zwei Pt100 handelt und zwei Pt1000 handelt. Als nomineller Widerstandswert wird im Rahmen dieser Anmeldung der Widerstandswert der Widerstände ohne Messbetrieb (also ohne Eigenerwärmung etc.) bezeichnet.

Die jeweils im Wesentlichen identisch ausgestalteten Widerständen sind dabei in Bezug auf die Topologie der Wheatstone'schen Brücke so angeordnet, dass genau ein Leiterknoten der Wheatstone'schen Brücke zwischen den im Wesentlichen identisch ausgestalteten Widerständen liegt. Gleichzeitig ist die räumliche Anordnung der im Wesentlichen identisch ausgestalteten Widerstände durch die gemeinsame Spiegelachse vorgegeben. Die ersten beiden im Wesentlichen identisch ausgestalteten Widerstände sind spiegelsymmetrisch in Bezug auf die gemeinsame Spiegelachse angeordnet, und die zweiten beiden im Wesentlichen identisch ausgestalteten Widerstände sind spiegelsymmetrisch in Bezug auf die gemeinsame Spiegelachse angeordnet. Diese Ausgestaltung eignet sich aufgrund der hohen Symmetrie insbesondere für die Erfindung. Es handelt sich um eine besonders symmetrische Ausgestaltung der Wheatstone'schen Brücke.

Beispielsweise können alle Widerstände in einer zur Durchflussrichtung parallelen Ebene angeordnet sein. In diesem Fall liegen die ersten beiden im Wesentlichen identisch ausgestalteten Widerstände auf einer zur Durchflussrichtung im Wesentlichen parallelen ersten Gerade, und die zweiten beiden im Wesentlichen identisch ausgestalteten Widerstände auf einer zur Durchflussrichtung parallelen zweiten Gerade, wobei die erste und die zweite Gerade nicht unbedingt übereinstimmen müssen. Selbstverständlich können die Widerstände auch alle auf einer gemeinsamen, zur Durchflussrichtung parallelen Geraden liegen.

Eine andere Möglichkeit ist, dass die ersten beiden im Wesentlichen identisch ausgestalteten Widerstände in einer ersten, zur Durchflussrichtung parallelen Ebene liegen, und dass die zweiten beiden im Wesentlichen identisch ausgestalteten Widerstände in einer zweiten, zur Durchflussrichtung parallelen Ebene liegen. Die ersten beiden im Wesentlichen identisch ausgestalteten Widerstände und die zweiten beiden im Wesentlichen identisch ausgestalteten Widerstände liegen in dieser Variante in Bezug auf den Durchfluss bzw. das Medium übereinander. Bei den möglichen Anordnungen muss immer gewährleistet sein, dass alle Widerstände mit dem Medium im thermischen Kontakt stehen. Eine Möglichkeit ist, in Bezug auf das Medium übereinander angeordnete Widerstände durch dünne Membrane voneinander elektrisch zu isolieren, wobei eine Wärmeleitung durch die Membrane weiterhin gewährleistet sein muss.

In einer zweiten Ausgestaltung der Erfindung unterscheidet sich der nominelle Widerstandswert (R1) der ersten beiden im Wesentlichen identisch ausgestalteten Widerstände vom nominellen Widerstandswert (R2) der zweiten beiden im Wesentlichen identisch ausgestalten Widerstände. Selbstverständlich kann alternativ auch R1=R2 gelten, wobei die zweite Ausgestaltung der Erfindung gegenüber dieser Variante bevorzugt ist.

In einer weiteren Ausgestaltung der Erfindung wird im Messbetrieb der vorgegebene Wert des elektrischen Stroms in Bezug auf den zu bestimmenden Durchfluss so gewählt, dass die durch den Strom in das Medium eingebrachte Wärmemenge (Q) und der zu bestimmende Durchfluss einen thermischen Gradienten entlang der Durchflussrichtung bedingen,
wobei der thermische Gradient eine messbare Spannung an den zwei zweiten nicht benachbarten Leiterknoten der Wheatstone'schen Brücke verursacht.

Diese Ausgestaltung beschreibt die Variante der Erfindung mit eigenerwärmten Widerständen. Der Strom muss dabei an die Widerstände bzw. die zum Heizen benötigte Leistung und an einen vorgegebenen Messbereich des zu erwarteten Durchflusses angepasst sein. Eine messbare Spannung bedeutet im Rahmen dieser Anmeldung, dass die Spannung mit fachüblichen Spannungsmessgeräten messbar ist.

In einer alternativen Ausgestaltung der Erfindung ist ein Heizelement zum Einbringen einer Wärmemenge (Q) in das Medium vorgesehen,
wobei das Heizelement im Wesentlichen in der Mitte zwischen den in Durchflussrichtung hintereinander versetzt angeordneten Widerständen (A,B,C,D) angeordnet ist, vorzugsweise auf der gemeinsamen Spiegelachse, und wobei das Heizelement eine von der Wheatstone'schen Brücke getrennte Strom- bzw. Spannungsversorgung aufweist. In dieser Ausgestaltung liegt das zusätzliche Heizelement also zwischen zwei der im Wesentlichen identisch ausgestalten Widerständen. Das zusätzliche Heizelement bringt also die zusätzliche Wärmemenge Q in das Medium ein. Je größer die durch das Heizelements in das Medium eingebrachte Wärmemenge, desto größer ist auch der Effekt auf die Widerstände der Wheatstone'schen Brücke. Damit lässt sich anhand des Heizelements die Empfindlichkeit des thermischen Durchflusssensors einstellen.

In einer Ausgestaltung weist das Heizelement einen temperaturabhängigen Widerstand auf, wobei das Heizelement vorzugsweise ein Kaltleiter ist. In dieser Ausgestaltung wird das Heizelement vorzugsweise auch mit einem konstant geregelten Strom gespeist.

In einer dazu alternativen Ausgestaltung weist das Heizelement einen im Wesentlichen temperaturunabhängigen Widerstand auf. Im Rahmen dieser Anmeldung wird als ein im Wesentlichen temperaturunabhängiger Widerstand ein Widerstand bezeichnet, der einen linearen Temperaturkoeffizienten von kleiner als 0,05 *10⁻³ K⁻¹ aufweist. In dieser Ausgestaltung kann das Heizelement entweder mit einem konstant geregelten Strom, oder mit einer konstant geregelten Spannung gespeist werden. Als Materialien für den im Wesentlichen temperaturunabhängigen Widerstand eignen sich beispielsweise Nickelchrom, Manganin, Konstantan oder auch Isaohm.

In einer weiteren Ausgestaltung sind für die Kaltleiter Platin und/oder Nickel und/oder Legierungen davon vorgesehen.

In einer weiteren Ausgestaltung ist eine zweite im Wesentlichen nicht-wärmeleitende Membran vorgesehen, wobei die zweite Membran die Widerstandsstruktur abdeckt. Damit ist auch eine Wärmeisolierung in die zweite Richtung gewährleistet.

In einer weiteren Ausgestaltung weist die erste und/oder die zweite Membran eine Schichtdicke von 5-10 Mikrometer auf.

In einer weiteren Ausgestaltung weist die erste Membran und/oder die zweite Membran Polyimid auf. Polyimide sind wegen ihrer Hitze- und Strahlungsbeständigkeit und ihren für die Erfindung wichtigen Isoliereigenschaften besonders vorteilhaft.

Die Erfindung wird anhand der nachfolgenden Figuren näher erläutert. Es zeigt:
Fig. 1a-d: Eine Aufsicht auf eine erfindungsgemäße Ausgestaltung des thermischen Durchflusssensors
Fig. 2a,b: Eine Aufsicht auf eine erfindungsgemäße Ausgestaltung des thermischen Durchflusssensors
Fig. 3: Eine Seitenansicht eines erfindungsgemäßen thermischen Durchflusssensor
Fig. 4a,b: Experimentelle Ergebnisse von Messungen mit dem erfindungsgemäßen thermischen Durchflusssensor

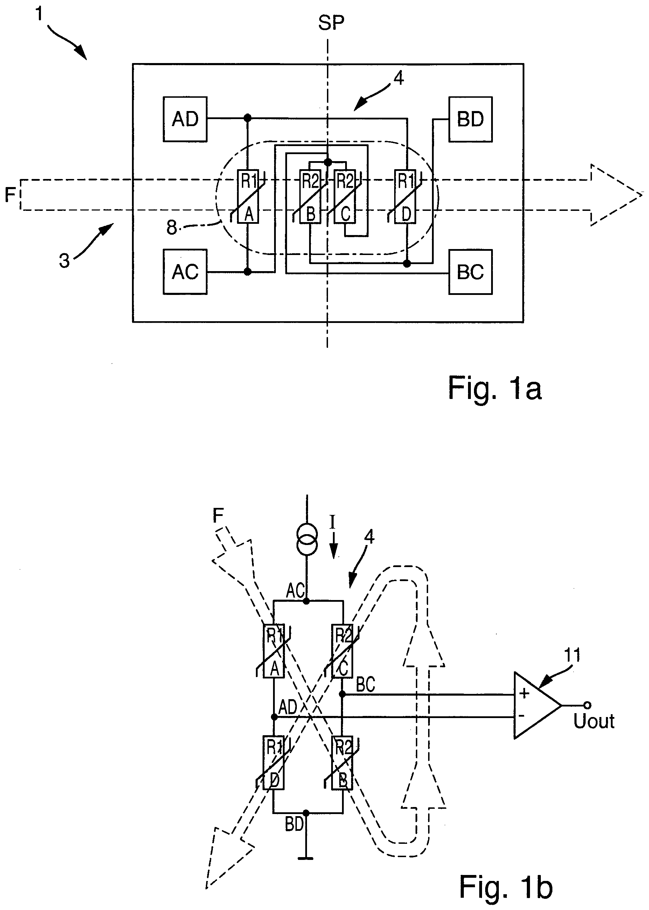

In Fig. 1a ist eine schematische Aufsicht auf eine Ausgestaltung des erfindungsgemäßen thermischen Durchflusssensors 1 dargestellt. In dieser Ausgestaltung sind die Widerstände B,C im Wesentlichen identisch ausgestaltet und haben den Widerstandswert R1. Auch die Widerstände A,D sind im Wesentlichen identisch ausgestaltetet, sie haben den Widerstandswert R2, wobei R1 und R2 unterschiedlich sind. Die Widerstände sind auf einer einzigen gemeinsamen Gerade in Durchflussrichtung F des Mediums 3 hintereinander versetzt in der Reihenfolge A-B-C-D bzw. R1-R2-R2-R1 angeordnet. In dieser Ausgestaltung sind die Widerstände B,C spiegelsymmetrisch in Bezug auf eine zum Durchfluss im Wesentlichen senkrechten Spiegelachse SP angeordnet. Andere Anordnung als die Anordnung auf einer gemeinsamen Geraden sind selbstverständlich möglich Die Wheatstone'sche Brücke 4 wird durch die hier gezeigte Verschaltung der vier Widerstände A,B,C,D gebildet. Dabei gibt es die hier gezeigten vier Leiterknoten AD,AC,BD,BC. D

In Fig. 1b ist dieselbe Vorrichtung wie in Fig. 1a gezeigt. In dieser Darstellung ist der Verlauf eines Durchflusses mit einer prinzipiell geraden Durchflussrichtung F in Bezug auf die Topologie der Wheatstone'schen Brücke 4 gezeigt. Die gezeigte Vorrichtung mit den Widerständen Widerstände R1-R2-R2-R1 ist dabei hochsymmetrisch. Die Wheatstone'sche Brücke 4 wird nun über die beiden nicht benachbarten Leiterknoten AC,BD mit einem auf einen konstanten Wert geregelten Strom I gespeist, wodurch an den Widerständen A,B,C,D eine Wärmemenge Q erzeugt und in das Medium 3 eingebracht wird. Fließt nun das Medium 3, wird durch den Wärmetransport die Symmetrie dieser hochsymmetrischen Wheatstone'schen Brücke 4 gestört. Die Asymmetrie ist dabei ein Maß für den Durchfluss, und lässt sich anhand der Spannung Uout zwischen den beiden weiteren nicht benachbarten Leiterknoten AD,BC ermitteln. Dabei kann auch ein Verstärker 11 eingesetzt werden , welcher die an der Wheatstone'schen Brücke 4 vorliegende Spannung Uout verstärkt.

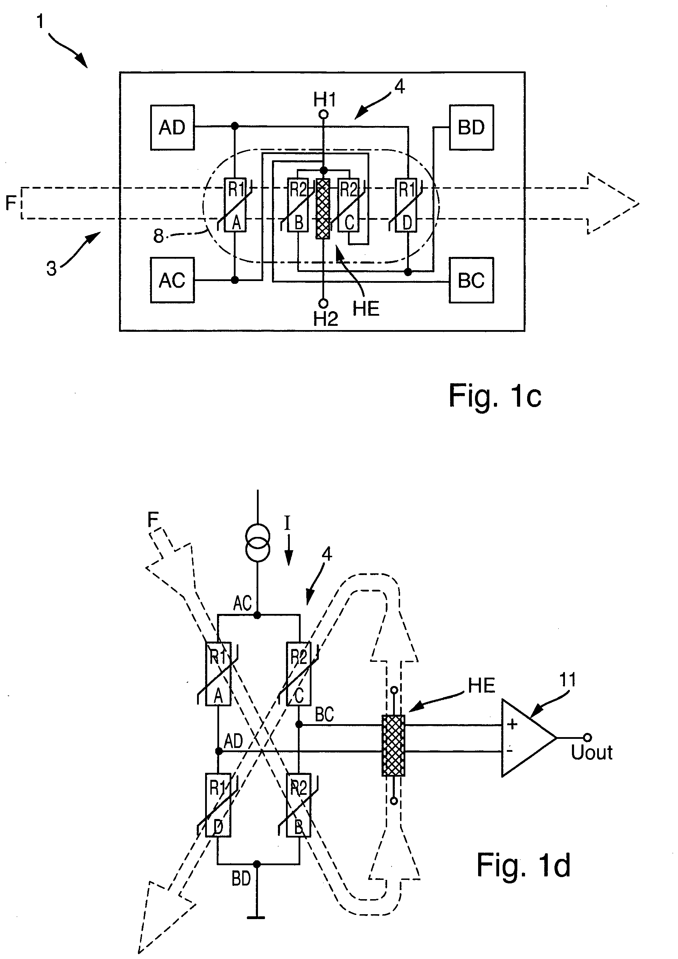

In Fig. 1c ist dieselbe Vorrichtung wie in Fig. 1a gezeigt, wobei hier die Ausgestaltung der Erfindung mit einem zusätzlichen Heizelement HE gezeigt ist. Das Heizelement hat dabei eine eigene Spannungs- bzw. Stromversorgung H1,H2, welche von der Wheatstone'schen Brücke 4 unabhängig ist. Heizelement HE ist in der Mitte zwischen den beiden im Wesentlichen identisch ausgestalten Widerständen B,C angeordnet. Damit liegt es auch auf der Spiegelachse. Anhand des Heizelement HE lässt sich die Empfindlichkeit des thermischen Durchflusssensors 1 einstellen.

In Fig. 1d ist, analog zu Fig. 1b, die Anordnung aus Fig. 1c gezeigt, wobei hier wieder die Darstellung in Bezug auf die Topologie der Wheatstone'schen Brücke 4 gewählt ist. Es ist deutlich erkennbar, dass das Heizelements HE nach den ersten beiden Widerständen A,B angeordnet ist. An dieser Stelle wird die zusätzliche Wärme Q durch das Heizelement HE eingebracht.

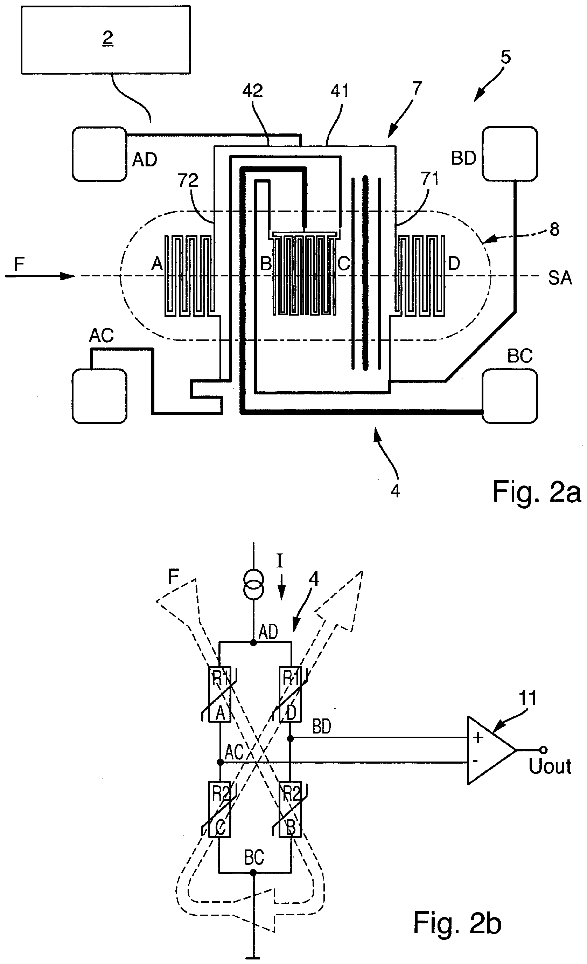

In Fig. 2a ist dieselbe Vorrichtung wie aus Fig. 1a gezeigt. In dieser Ausgestaltung des thermischen Durchflusssensors handelt es sich bei den Widerständen A,B,C,D bzw. der Wheatstone'schen Brücke 4 um ein einziges Dünnschichtsensorelement 5. Durch den mäanderförmigen Verlauf der Widerstandsstruktur 7 werden dabei die Widerstände A,B,C,D gebildet. Wird die Vorrichtung über die Leiterknoten AC,BD von der Regel-/Auswerteeinheit 2 mit einem konstanten Strom I beaufschlagt, so ergibt sich dasselbe Bild wie schon in Fig. 1b gezeigt.

Alternativ lässt sich die Widerstandsstruktur 7 auch über die Leiterknoten AD, BC mit dem konstant geregelten Strom I beaufschlagen. Damit ergibt sich ein leicht geänderter Verlauf des Durchflusses mit der prinzipiell geradlinigen Durchflussrichtung F in Bezug auf das Ersatzschaltbild der Wheatstone'schen Brücke 4; dies ist in Fig. 2b. dargestellt.

Auch ist in Fig. 2a die erste Membran 8 der Erfindung dargestellt, sowie eine gemeinsame Symmetrieachse SA der ersten Membran 8 mit dem Substrat 6 (nicht dargestellt). Durch Schwankungen in der Fertigung kann es nun dazu kommen, dass die Widerstandsstruktur 7 in Bezug auf die Symmetrieachse SA verrutscht. In der Erfindung werden durch geringes Verrutschen bedingte mögliche Effekt minimiert. Diese gelingt dadurch, dass die Widerstandsstruktur 7 so angeordnet ist, dass sich eine Verschiebung der Widerstandsstruktur 7 auf symmetrische Art und Weise auswirkt. Bei einem Verrutschen verlängert bzw. verkürzt sich der erste Abschnitt 71 der Widerstandsstruktur 7 im ersten Strompfad 41 der Wheatstone'schen Brücke 4 um eine erste Längenänderung. Genauso verlängert bzw. verkürzt sich der zweite Abschnitt 72 der Widerstandsstruktur 7 im zweiten Strompfad 42 der Wheatstone'schen Brücke 4 um eine zweite Längenänderung. Wichtig ist hierbei die Längenänderung des auf der ersten Membran 8 angeordneten Anteils dl1 bzw. dl2. Bei einer kleinen Verschiebung der Widerstandsstruktur 7 in Bezug auf die Symmetrieachse SA, d.h. von unter 10%, ändert sich der auf der ersten Membran 8 angeordnete Anteil dl1 im gleichen Maße wie dl2. Daher wird die Symmetrie durch kleine Verschiebungen nicht zerstört. Diese Ausgestaltung ist insbesondere interessant für die besonders bevorzugte hochsymmetrische Ausgestaltung der Wheatstone'schen Brücke 4.

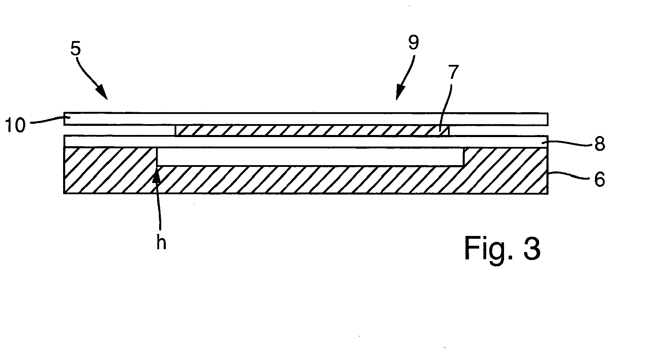

In Fig. 3 ist eine schematische Seitenansicht auf die Ausgestaltung des thermischen Durchflusssensors gezeigt, bei der ein Dünnschichtsensorelement 5 verwendet wird. Das Substrat 6 (gestreift) ist in einem vorgegebenen Bereich 9 um einen Versatz h abgesenkt. In diesem vorgegebenen Bereich 9 ist die Widerstandsstruktur 7 auf der ersten Membran 8 angeordnet. Dadurch ist die erste Membran 8 in diesem vorgegebenen Bereich 9 frei tragend; es wird ein Spalt der Höhe h gebildet. Dadurch wird eine thermische Isolation zwischen der Widerstandsstruktur 7 und dem Substrat 6 erreicht. Die zweite Membran 10 deckt die Widerstandsstruktur 7 zusätzlich ab.

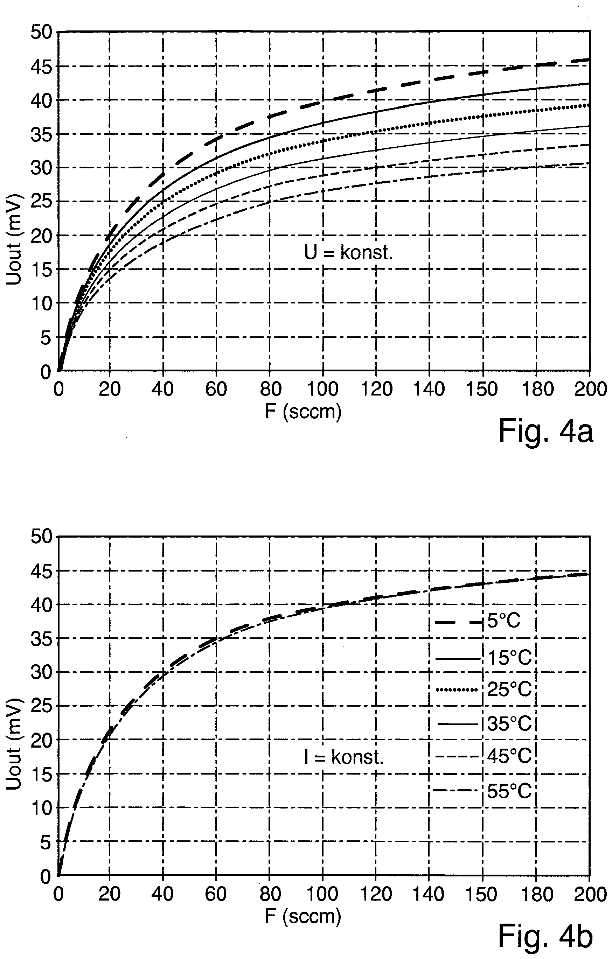

In Fig. 4b sind experimentelle Ergebnisse von Messungen mit dem erfindungsgemäßen thermischen Durchflusssensor 1 dargestellt. Zum Vergleich sind in Fig. 4a experimentelle Ergebnisse mit derselben Vorrichtung gezeigt, wobei im Gegensatz zur erfindungsgemäßen Regelung auf einen konstanten Stromwert I in Fig. 4a auf eine konstante Spannung geregelt wurde. In beiden Figuren 4a,4b ist auf der Ordinatenachse die an der Wheatstone'schen Brücke vorliegende Spannung Uout, sowie auf der Abszissenachse der tatsächliche vorliegende Durchfluss aufgetragen. Gezeigt sind in 4a,b jeweils verschiedene Kurven für verschiedene Umgebungstemperaturen von 5-55°C in Schritten von jeweils 10°C. Es ist deutlich erkennbar, dass die konstante Spannungsregelung in Fig. 4a eine starke Temperaturabhängigkeit zeigt. Dies zeigt, dass bei gleichem tatsächlich vorliegendem Durchfluss in Abhängigkeit von der Umgebungstemperatur eine unterschiedliche Uout und damit ein unterschiedliches Messsignal ermittelt wird. Die Abhängigkeit des Messsignals von der Umgebungstemperatur ist dabei ca. 1% pro Kelvin.

Demgegenüber zeigt der auf einen konstanten Strom I geregelte erfindungsgemäße thermische Durchflusssensor 1 im Wesentlichen so gut wie keine Abhängigkeit von der Umgebungstemperatur. Alle Kurven zu unterschiedlichen Temperaturen fallen zusammen. Dies ist im besonderen Maße vorteilhaft, auch weil durch die Temperaturunabhängigkeit eine Mehrpunktkalibrieung des thermischen Durchflusssensors 1 ermöglicht wird, beispielsweise indem eine derartige temperaturunabhängige und sensorspezifische Kennlinie in der Regel-/Auswerteeinheit 2 hinterlegt ist.

### Bezugszeichenliste

- 1: Thermischer Durchflusssensor
- 2: Regel-/Auswerteeinheit
- 3: Medium
- 4: Wheatstone'sche Brücke
- 41: erster Strompfad
- 42: zweiter Strom pfad
- 5: Dünnschichtsensorelement
- 6: Substrat
- 7: Widerstandsstruktur
- 71: Abschnitt der Widerstandsstruktur
- 72: Abschnitt der Widerstandsstruktur
- 8: erste Membran
- 9: vorgegebener Bereich
- 10: zweite Membran
- 11: Verstärker

- A: Widerstand
- B: Widerstand
- C: Widerstand
- D: Widerstand

- AC: Leiterknoten
- AD: Leiterknoten
- BC: Leiterknoten
- BD: Leiterknoten

- F: Durchflussrichtung
- I: konstant geregelter Strom
- Uₒᵤₜ: an der Brücke vorliegende Spannung

- R1: erster Widerstandswert
- R2: zweiter Widerstandswert
- SP: Spiegelachse
- Q: eingebrachte Wärmemenge
- HE: Heizelement
- SA: Symmetrieachse
- h: Versatz
- dl1: erste Längenänderung
- dl2: zweite Längenänderung

## Patentansprüche

1. Thermischer Durchflusssensor (1) zur Bestimmung des Durchflusses eines in eine Durchflussrichtung (F) strömenden Mediums (3),
wobei vier elektrische Widerstände (A,B,C,D) mit einen temperaturabhängigen elektrischen Widerstand aus einem kaltleitenden Material und eine Regel-/Auswerteeinheit (2) vorgesehen sind,
wobei die vier Widerstände (A,B,C,D) in einer Wheatstone'schen Brücke (4) miteinander verschaltet sind, wobei die Wheatstone'sche Brücke (4) als ein oder mehrere Dünnschichtsensorelemente (5) ausgestaltet ist und das Dünnschichtsensorelement (5) eine auf einem elektrisch isolierenden Substrat (6) angeordnete Widerstandsstruktur (7) mit einer Schichtdicke von 0.1-10 Mikrometer aufweist,
wobei die vier Widerstände (A,B,C,D) im Messbetrieb im thermischen Kontakt mit dem Medium (3) stehen,
wobei die Regel-/Auswerteeinheit (2) dazu ausgestaltet ist, im Messbetrieb die Wheatstone'schen Brücke (4) über zwei erste nicht benachbarte Leiterknoten (AC,BD; AD, BC) der Wheatstone'schen Brücke mit einem elektrischen Strom (I) zu speisen,
und wobei die Regel-/Auswerteeinheit (2) dazu ausgestaltet ist, die im Messbetrieb vorliegende Spannung (Uₒᵤₜ) an zwei zweiten nicht benachbarten Leiterknoten (AD,BC; AC,BD) der Wheatstone'schen Brücke (4) zu messen und daraus den Durchfluss zu bestimmen,
wobei eine auf dem Substrat (6) angeordnete nicht-wärmeleitende erste Membran (8) vorgesehen ist,
wobei in einem vorgegebenen Bereich (9) des Substrats (6) die Widerstände (A,B,C,D) der Widerstandsstruktur (7) auf der ersten Membran (8) angeordnet sind,
und wobei das Substrat (6) in dem vorgegeben Bereich (9) in einer zu der Oberfläche des Substrats (6) senkrechten Richtung um einen vorgegebenen Versatz (h) abgesenkt ist, so dass die erste Membran (8) in dem vorgegebenen Bereich (9) frei tragend ist,
und dass die erste Membran (8) die Widerstände (A,D,C,B) von dem Substrat (6) im vorgegebenen Bereich (9) in der zu der Oberfläche des Substrats senkrechten Richtung thermisch isoliert,
wobei die erste Membran (8) zumindest eine gemeinsame Symmetrieachse (SA) mit dem Substrat (3) aufweist,
wobei die gemeinsame Symmetrieachse (SA) im Wesentlichen parallel zur Oberfläche des Substrats (3) ist,
wobei die vier Widerstände (A,B,C,D) in Durchflussrichtung (F) versetzt angeordnet sind,
**dadurch gekennzeichnet, dass**
- die Regel-/Auswerteeinheit die Wheatstone'sche Brücke mit einem auf einen konstanten, vorgegebenen Wert geregelten Strom (I) speist und
- dass bei einer kleinen, durch Schwankungen in der Fertigung bedingten Verschiebung der Widerstandsstruktur (7) von unter 10% in Bezug auf die gemeinsame Symmetrieachse (SA) die Verschiebung
- eine erste Längenänderung (dl1) des auf der ersten Membran (8) angeordneten Abschnitts (71) der Widerstandsstruktur (7) in einem ersten Strompfad (41) der Wheatstone'schen Brücke (4) und
- eine zweite Längenänderung (dl2) des auf der ersten Membran (8) angeordneten Abschnitts (72) der Widerstandsstruktur (7) in einem zweiten Strompfad (42) der Wheatstone'schen Brücke (4) bewirkt,
wobei die Widerstandsstruktur (10) derart in Bezug zu der Membran (8) angeordnet ist, dass die erste Längenänderung (dl1) und die zweite (dl2) Längenänderung gleich groß sind.

2. Thermischer Durchflusssensor (1) nach Anspruch 1,
wobei jeweils zwei (A,D);(B,C) der vier Widerstände (A,B,C,D) im Wesentlichen identisch ausgestaltet sind,
wobei die im Wesentlichen identisch ausgestalteten Widerstände (A,D);(B,C) jeweils durch einen Leiterknoten (AC;BC;BD,AD) der Wheatstone'schen Brücke (4) benachbart sind,
und wobei die jeweils im Wesentlichen identisch ausgestalteten Widerstände (A,D);(B,C) im Wesentlichen spiegelsymmetrisch in Bezug auf eine gemeinsame Spiegelachse (SP) angeordnet sind, wobei die Spiegelachse (SP) im Wesentlichen senkrecht zur Durchflussrichtung (F) ist.

3. Thermischer Durchflusssensor (1) nach Anspruch 2,
wobei sich der nominelle Widerstandswert (R1) der ersten beiden im Wesentlichen identisch ausgestalteten Widerstände (A,D) vom nominellen Widerstandswert (R2) der zweiten beiden im Wesentlichen identisch ausgestalten Widerstände (B,C) unterscheidet.

4. Thermischer Durchflusssensor (1) nach zumindest einem der Ansprüche 1-3,
wobei im Messbetrieb der vorgegebene Wert des elektrischen Stroms (I) derart an einen vorgegebenen Messbereichs des erwarteten, zu bestimmenden Durchflusses (F) angepasst ist,
dass die durch den Strom (I) in das Medium (3) eingebrachte Wärmemenge (Q) und der zu bestimmende Durchfluss einen thermischen Gradienten entlang der Durchflussrichtung (F) bedingen,
wobei der thermische Gradient eine messbare Spannung (Uout) an den zwei zweiten nicht benachbarten Leiterknoten (AC,BD);(AD,BC) der Wheatstone'schen Brücke verursacht.

5. Thermischer Durchflusssensor (1) nach zumindest einem der Ansprüche 1-4,
wobei ein Heizelement (HE) zum Einbringen einer Wärmemenge (Q) in das Medium (3) vorgesehen ist,
wobei das Heizelement (HE) im Wesentlichen in der Mitte zwischen den in Durchflussrichtung (F) hintereinander versetzt angeordneten Widerständen (A,B,C,D) angeordnet ist, vorzugsweise auf der gemeinsamen Spiegelachse (SP),
und wobei das Heizelement (HE) eine von der Wheatstone'schen Brücke (4) getrennte Strom- bzw. Spannungsversorgung aufweist.

6. Thermischer Durchflusssensor (1) nach zumindest einem der Ansprüche 1-5,
wobei das Heizelement (HE) einen temperaturabhängigen Widerstand aufweist,
und wobei das Heizelement (HE) vorzugsweise ein Kaltleiter ist.

7. Thermischer Durchflusssensor (1) nach zumindest einem der Ansprüche 1-5,
wobei das Heizelement (HE) einen im Wesentlichen temperaturunabhängigen Widerstand aufweist.

8. Thermischer Durchflusssensor (1) nach zumindest einem der Ansprüche 1-7,
wobei die Kaltleiter (A,B,C,D;HE) Platin und/oder Nickel und/oder Legierungen davon aufweisen

9. Thermischer Durchflusssensor (1) nach Anspruch 1,
wobei eine zweite im Wesentlichen nicht-wärmeleitende Membran (10) vorgesehen ist, wobei die zweite Membran (10) die Widerstandsstruktur (7) abdeckt.

10. Thermischer Durchflusssensor (1) nach Anspruch 1 oder 9, wobei die erste Membran (8) und/oder die zweite Membran (10) eine Schichtdicke von 5-10 Mikrometer aufweist.

11. Thermischer Durchflusssensor (1) nach zumindest einem der Ansprüche 1, 9 oder 10, wobei die erste Membran (8) und/oder die zweite Membran (10) Polyimid aufweist.

## Claims

1. Thermal flow sensor (1) for determining the flow of a medium (3) flowing in a flow direction (F),
wherein four electrical resistors (A, B, C, D) are provided with a temperature-dependent electrical resistance, wherein said resistors are made from material that conducts cold, and wherein a control/evaluation unit (2) is also provided,
wherein the four resistors (A, B, C, D) are interconnected in a Wheatstone bridge (4), wherein the Wheatstone bridge (4) is designed as one or more thin-film sensor elements (5) and wherein the thin-film sensor element (5) has a resistance structure (7), which is arranged on an electrically insulating substrate (6) and which has a film thickness of 0.1 to 10 micrometers,
wherein, during operation, the four resistors (A, B, C, D) are in thermal contact with the medium (3),
wherein the control/evaluation unit (2) is designed to supply an electrical current (I), during the measuring mode, to the Wheatstone bridge (4) via two first non-adjacent conductor nodes (AC, BD ; AD, BC) of the Wheatstone bridge,
and wherein the control/evaluation unit (2) is designed to measure the voltage (Uₒᵤₜ), which is present during the measuring mode, at two second non-adjacent conductor nodes (AD, BC ; AC, BD) of the Wheatstone bridge (4), and to determine the flow from this,
wherein a first membrane (8), which does not conduct heat, is arranged on the substrate (6),
wherein the resistors (A, B, C, D) of the resistance structure (7) are arranged on the first membrane (8) in a predefined area (9) of the substrate (6),
and wherein, in the predefined area (9), the substrate (6) is lowered by a predefined gap (h) in a direction that is perpendicular to the surface of the substrate (6) in such a way that the first membrane (8) is freely suspended in the predefined area (9),
and in such a way that the first membrane (8) thermally insulates the resistors (A, D, C, B) from the substrate (6) in the predefined area (9) in the direction that is perpendicular to the surface of the substrate,
**characterized in that**
- the control/evaluation unit supplies a current (I) to the Wheatstone bridge, said current being regulated to a constant, predefined value, and
- in the event of a minor shift of the resistance structure (7) of less than 10 % in relation to the common axis of symmetry (SA), caused by variations in the fabrication, the shift causes
- a first change in the length (dl1) of the section (71) of the resistance structure (7) arranged on the first membrane (8) in a first current path (41) of the Wheatstone bridge (4) and
- a second change in the length (dl2) of the section (72) of the resistance structure (7) arranged on the first membrane (8) in a second current path (42) of the Wheatstone bridge (4),
wherein the resistance structure (10) is arranged in relation to the membrane (8) in such a way that the first change in the length (dl1) and the second change in the length (dl2) are equal.

2. Thermal flow sensor (1) as claimed in Claim 1,
wherein in each case two (A, D) ; (B, C) of the four resistors (A, B, C, D) are essentially designed in an identical manner,
wherein the resistors (A, D) ; (B, C), which are essentially identical in design, are adjacent to one another, in each case, via a conductor node (AC ; BC ; BD, AD) of the Wheatstone bridge (4),
and wherein the resistors (A, D) ; (B, C), which are essentially identical in design, are essentially arranged in mirror symmetry in relation to a common mirror axis (SP), wherein the mirror axis (SP) is essentially perpendicular to the flow direction (F).

3. Thermal flow sensor (1) as claimed in Claim 2,
wherein the nominal resistance value (R1) of the two first resistors (A, D), which are essentially identical in design, differ from the nominal resistance value (R2) of the second of the two resistors (B, C), which are essentially identical in design.

4. Thermal flow sensor (1) as claimed in at least one of the Claims 1 to 3,
wherein, in the measuring mode, the predefined value of the electrical current (I) is adapted to a predefined measuring range of the anticipated flow (F) to be determined in such a way that the quantity of heat (Q) introduced into the medium (3) by the current (I) and the flow to be determined causes a thermal gradient along the flow direction (F), wherein the thermal gradient causes a measurable voltage (Uₒᵤₜ) at the two second non-adjacent conductor nodes (AC, BD) ; (AD,BC) of the Wheatstone bridge.

5. Thermal flow sensor (1) as claimed in at least one of the Claims 1 to 4,
wherein a heating element (HE) is provided to introduce a quantity of heat (Q) into the medium (3),
wherein the heating element (HE) is essentially arranged in the middle between the resistors (A, B, C, D), arranged behind one another in an essentially offset manner in the flow direction (F), preferably on a common mirror axis (SP), and
wherein the heating element (HE) has an electricity or voltage supply that is separated from the Wheatstone bridge (4).

6. Thermal flow sensor (1) as claimed in at least one of the Claims 1 to 5,
wherein the heating element (HE) has a temperature-dependent resistor, and wherein the heating element (HE) is preferably a PTC thermistor.

7. Thermal flow sensor (1) as claimed in at least one of the Claims 1 to 5,
wherein the heating element (HE) has an essentially temperature-independent resistor.

8. Thermal flow sensor (1) as claimed in at least one of the Claims 1 to 7,
wherein the PTC thermistors (A, B, C, D; HE) comprise platinum and/or nickel and/or alloys of same.

9. Thermal flow sensor (1) as claimed in Claim 1,
wherein a second membrane (10) which essentially does not conduct heat is provided, wherein the second membrane (10) covers the resistance structure (7).

10. Thermal flow sensor (1) as claimed in Claim 1 or 9,
wherein the first membrane (8) and/or the second membrane (10) has a film thickness of 5 to 10 micrometers.

11. Thermal flow sensor (1) as claimed in at least one of the Claims 1, 9 or 10,
wherein the first membrane (8) and/or the second membrane (10) comprises/comprise polyimide.

## Revendications

1. Capteur de débit thermique (1) destiné à déterminer le débit d'un produit (3) s'écoulant dans un sens d'écoulement (F),
capteur pour lequel sont prévus - quatre résistances électriques (A, B, C, D) avec une résistance électrique dépendant de la température, lesquelles résistances sont constituées d'un matériau conducteur de froid - ainsi qu'une unité de régulation / d'exploitation (2),
les quatre résistances (A, B, C, D) étant interconnectées dans un pont de Wheatstone (4), le pont de Wheatstone (4) étant conçu comme un ou plusieurs éléments capteurs à couche mince (5) et l'élément capteur à couche mince (5) présentant une structure résistive (7) qui est disposée sur un substrat électriquement isolant (6) et qui présente une épaisseur de couche de 0,1 à 10 microns,
les quatre résistances (A, B, C, D) étant en contact thermique avec le produit (3) pendant le mode de mesure,
l'unité de régulation / d'exploitation (2) étant conçue pour alimenter avec un courant électrique (I), pendant le mode de mesure, le pont de Wheatstone (4) par l'intermédiaire de deux premiers nœuds de conducteurs non adjacents (AC, BD ; AD, BC) du pont de Wheatstone,
et l'unité de régulation / d'exploitation (2) étant conçue pour mesurer la tension (Uₒᵤₜ) présente dans le mode de mesure au niveau de deux seconds nœuds de conducteurs non adjacents (AD, BC ; AC, BD) du pont de Wheatstone (4), et pour déterminer le débit à partir de celle-ci,
une première membrane (8) non conductrice de chaleur étant disposée sur le substrat (6),
les résistances (A, B, C, D) de la structure résistive (7) étant disposées sur la première membrane (8), dans une zone prédéfinie (9) du substrat (6),
et le substrat (6) étant abaissé dans la zone prédéfinie (9) dans une direction perpendiculaire à la surface du substrat (6) d'un décalage prédéfini (h), de telle sorte que la première membrane (8) est suspendue librement dans la zone prédéfinie (9),
et de telle sorte que la première membrane (8) isole thermiquement les résistances (A, D, C, B) du substrat (6) dans la zone prédéfinie (9) dans la direction perpendiculaire à la surface du substrat,
**caractérisé**
- **en ce que** l'unité de régulation / d'exploitation alimente le pont de Wheatstone avec un courant (I) régulé à une valeur constante prédéfinie, et
- **en ce que**, dans le cas d'un petit décalage de la structure résistive (7) de moins de 10 % par rapport à l'axe de symétrie commun (SA) en raison de variations de fabrication, le décalage provoque
- une première variation de longueur (dl1) de la partie (71) de la structure résistive (7) disposée sur la première membrane (8) dans un premier trajet de courant (41) du pont de Wheatstone (4) et
- une seconde variation de longueur (dl2) de la partie (72) de la structure résistive (7) disposée sur la première membrane (8) dans un second trajet de courant (42) du pont de Wheatstone (4),
la structure résistive (10) étant disposée par rapport à la membrane (8) de telle sorte que la première variation de longueur (dl1) et la seconde variation de longueur (dl2) soient égales.

2. Capteur de débit thermique (1) selon la revendication 1,
pour lequel respectivement deux (A, D) ; (B, C) des quatre résistances (A, B, C, D) sont pour l'essentiel conçues de manière identique,
les résistances (A, D) ; (B, C), conçues pour l'essentiel de manière identique, étant chacune adjacentes par un nœud de conducteurs (AC ; BC ; BD, AD) du pont de Wheatstone (4),
et les résistances respectives (A, D) ; (B, C), conçues pour l'essentiel de manière identique, étant disposées pour l'essentiel de manière symétrique par rapport à un axe de symétrie commun (SP), l'axe de symétrie (SP) étant pour l'essentiel perpendiculaire au sens d'écoulement (F).

3. Capteur de débit thermique (1) selon la revendication 2,
pour lequel la valeur de résistance nominale (R1) des deux premières résistances (A, D), conçues pour l'essentiel de manière identique, diffère de la valeur de résistance nominale (R2) des deux secondes résistances (B, C), conçues pour l'essentiel de manière identique.

4. Capteur de débit thermique (1) selon au moins l'une des revendications 1 à 3,
pour lequel, dans le mode de mesure, la valeur prédéfinie du courant électrique (I) est adaptée à une gamme de mesure prédéfinie du débit attendu (F) à déterminer,
de telle sorte que la quantité de chaleur (Q) introduite dans le produit (3) par le courant (I) et le débit à déterminer provoquent un gradient thermique le long du sens d'écoulement (F),
le gradient thermique provoquant une tension mesurable (Uₒᵤₜ) au niveau des deux seconds nœuds de conducteurs non adjacents (AC, BD) ; (AD,BC) du pont de Wheatstone.

5. Capteur de débit thermique (1) selon au moins l'une des revendications 1 à 4,
pour lequel il est prévu un élément chauffant (HE) pour introduire une quantité de chaleur (Q) dans le produit (3),
pour lequel l'élément chauffant (HE) est disposé pour l'essentiel au milieu entre les résistances (A, B, C, D) disposées de manière décalée les unes derrière les autres dans le sens d'écoulement (F), de préférence sur l'axe de symétrie commun (SP), et
pour lequel l'élément chauffant (HE) présente une alimentation en courant ou en tension séparée du pont de Wheatstone (4).

6. Capteur de débit thermique (1) selon au moins l'une des revendications 1 à 5,
pour lequel l'élément chauffant (HE) présente une résistance dépendant de la température, et pour lequel l'élément chauffant (HE) est de préférence une thermistance CTP.

7. Capteur de débit thermique (1) selon au moins l'une des revendications 1 à 5,
pour lequel l'élément chauffant (HE) présente une résistance pour l'essentiel indépendante de la température.

8. Capteur de débit thermique (1) selon au moins l'une des revendications 1 à 7,
pour lequel les thermistances CTP (A, B, C, D; HE) comprennent du platine et/ou du nickel et/ou des alliages de ceux-ci.

9. Capteur de débit thermique (1) selon la revendication 1,
pour lequel une deuxième membrane (10) pour l'essentiel non conductrice de chaleur est prévue, la deuxième membrane (10) recouvrant la structure résistive (7).

10. Capteur de débit thermique (1) selon la revendication 1 ou 9,
pour lequel la première membrane (8) et/ou la deuxième membrane (10) présente(nt) une épaisseur de couche de 5 à 10 microns.

11. Capteur de débit thermique (1) selon au moins l'une des revendications 1, 9 ou 10,
pour lequel la première membrane (8) et/ou la deuxième membrane (10) comprend/comprennent du polyimide.
